Europäisches Patentamt

European Patent Office

Office européen des brevets

(19)

(11) **EP 1 345 131 A2**

(12) **EUROPEAN PATENT APPLICATION**

(43) Date of publication:
**17.09.2003 Bulletin 2003/38**

(51) Int Cl.[7]: **G06F 17/30**

(21) Application number: **02257219.2**

(22) Date of filing: **17.10.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **15.03.2002 JP 2002071823**

(71) Applicant: **FUJITSU LIMITED**
**Kawasaki-shi, Kanagawa 211-8588 (JP)**

(72) Inventors:
• **Okamoto, Seishi, c/o Fujitsu Limited**
**Kawasaki-shi, Kanagawa 211-8588 (JP)**

• **Inakoshi, Hiroya, c/o Fujitsu Limited**
**Kawasaki-shi, Kanagawa 211-8588 (JP)**
• **Sato, Akira, c/o Fujitsu Limited**
**Kawasaki-shi, Kanagawa 211-8588 (JP)**
• **Ando, Takahisa, c/o Fujitsu Limited**
**Kawasaki-shi, Kanagawa 211-8588 (JP)**
• **Ozaki, Toru, c/o Fujitsu Limited**
**Kawasaki-shi, Kanagawa 211-8588 (JP)**

(74) Representative: **Mohun, Stephen John**
**Haseltine Lake & Co.,**
**Imperial House,**
**15-19 Kingsway**
**London WC2B 6UD (GB)**

(54) **Profile information recommendation method, program and apparatus**

(57) When a request for processing is made after at least profile data which serves as input and profile attribute to be output have been specified, the case database, which stores case data in which a relation taking place between a plurality of piece of profile data is represented as a set of profile data, is retrieved in the case retrieval step for cases similar to profile data given as input. Next, in the dynamic learning step, significance of each of the attribute values for the attribute specified as output is calculated such that high significance is given to the attribute value which is characteristic of the set of case data retrieved in the case retrieval step. Further, in the recommended data determination step, the score of each piece of profile data in the profile database is calculated based on the significance, as calculated in the dynamic learning step, of each of the attribute values for the attribute specified as output, and profile data with high scores is recommended.

FIG. 2

EP 1 345 131 A2

**Description**

The present invention relates generally to a profile recommendation method, program and apparatus for the recommendation of profile data in which contents, services, users and the like are characterized as pairs of attribute and attribute value and, more particularly to a profile recommendation method, program and apparatus for the recommendation of profile data suitable for users in a manner which is easier for users to understand.

A previously known profile data recommendation methods is, as disclosed in JP, 2000-148864, for example, that in which profile data is created by characterizing users and commodities, similar users are clustered in advance based on the created profile data and commodities and cluster information are recommended to a specific user based on the information from the cluster to which the user belongs. According to this recommendation method, by classifying the cluster closest to a user as the cluster to which the user belongs, it is possible to recommend not only commodities suitable for the user but also the classified cluster information based on the information from the classified cluster.

However, such a conventional profile recommendation method presents at least four problems. First of all, since recommendations are made based on the cluster classification to which a user belongs, according to the conventional profile recommendation method, degraded accuracy in recommendation to users has been noticeably observed if the classified cluster contains users dissimilar to the user or if a cluster other than the classified cluster contains users similar to the user. More particularly, if the user profile data is far away from the center of the cluster under which the user is classified, degraded accuracy in recommendation to users can noticeably occur. Moreover, according to the conventional profile recommendation method, since it is necessary to create clusters in advance before making a recommendation, new clusters must be created in order to respond to changes in profile data groups. Consequently, running cost associated with cluster creation is required, and if profile data groups change considerably, it will be difficult to respond to such changes.

Further, according to the conventional profile recommendation method, a problem occurs in which no matter how suitable a specific commodity is for a user, this commodity will never be recommended to the user unless the commodity is included in the information from the cluster to which the user belongs. More particularly, this problem can noticeably occur in the case of recommendation of new commodities. Finally, according to the conventional profile recommendation method, since means by which to present recommendation results in an easy-to-understand manner are not available, it is difficult for users to determine by themselves whether recommendation results are useful for them.

In accordance with the present invention, a profile information recommendation method, program and apparatus can be provided at a low running cost, which can flexibly respond to changes in profile data groups, make recommendations suitable for users and allow users to readily determine whether recommendation results are useful for them.

According to a first aspect of the present invention there is provided a profile information recommendation method using a profile database and a case database, the profile database storing therein contents, services, users and the like as profile data featured as sets of pairs of an attribute and an attribute value, the case database storing therein relations taking place between a plurality of pieces of profile data as case data represented in the form of profile data, the method comprising:

an input step which specifies and enters at least profile data as input and a profile attribute to be output;
a case retrieval step which retrieves cases similar to profile data given as input, from the case database;
a dynamic learning step which figures out significance of each of attribute values for the attribute specified as output such that high significance is given to the attribute value which is characteristic of a set of cases retrieved in the case retrieval step; and
a recommended data determination step which based on the significance, as figured out in the dynamic learning step, of each of the attribute values for the attribute specified as output, figures out the score of each piece of profile data in the profile database and recommends profile data with high scores. Consequently, according to this invention, since cases similar to profile data given as inputs are retrieved and recommendations are made using retrieved cases based on dynamic learning of profile attribute significance, it is possible to flexibly respond to changes in profile data and case information and make recommendations suitable for users at a low running cost. Moreover, since score calculations, targeted for profile data belonging to a profile database, are performed, it will be possible to recommend new profile data if it is useful for users.

The dynamic learning step figures out the significance of each of the attribute values for the attribute specified as output, in the form of probability of occurrence of the attribute value in the set of similar cases retrieved in the case retrieval step. The dynamic learning step may figure out the significance of each of the attribute values for the attribute specified as output, in the form of a residual between probability of occurrence of the attribute value in the set of cases for the attribute specified as output in the case database and probability of occurrence of the attribute value in the set of similar cases retrieved in the case retrieval step. The dynamic learning step may figure out the significance of each of the attribute values for the attribute specified as output, in the form of a value corresponding to each attribute value of negative entropy for an attribute value distribution for the attribute value specified as output in the set of cases in the case database pertaining to an occurrence distribution of attribute values for the attribute specified as output in the set of similar cases retrieved in the case retrieval step.

The profile information recommendation method of the present invention further comprises a reason for recommendation assignment step which selects attribute values with high significance as figured out in the dynamic learning step, in the form of attribute values for reasons for recommendation of the profile data, from among attribute values occurring in each piece of profile data recommended in the recommended data determination step, the reason for recommendation assignment step assigning information on the selected attribute value to the profile data to make recommendations. Thus, presentation of a reason for recommendation allows users to readily determine whether recommended profile data is useful for them.

The profile information recommendation method further comprises a viewpoint-by-viewpoint recommendation step which selects an attribute with greatest freedom in the set of cases retrieved in the retrieval step for each of the attributes specified as outputs, the viewpoint-by-viewpoint recommendation step recommending profile data with high scores, as figured out in the recommended data determination step, for each of the attribute values for the attribute selected. Thus, presentation of recommendation results for each viewpoint allows users to readily determine whether recommended profile data is useful for them.

The viewpoint-by-viewpoint recommendation step figures out a variance of probabilities of occurrence of attribute values for each of the attributes specified as outputs in the set of cases retrieved in the case retrieval step, selects an attribute with the smallest variance as the attribute with the greatest freedom for recommendation and recommends profile data with high scores, as figured out in the recommended data determination step, for each of the attribute values for the selected attribute. The viewpoint-by-viewpoint recommendation step may figure out the sum square of a residual between probability of occurrence of each of the attribute values for each of the attributes specified as outputs in the set of cases in the case database and probability of occurrence of each of the attribute values for each of the attributes specified as outputs in the set of similar cases retrieved in the case retrieval step, select an attribute with the smallest residual sum square as the attribute with the greatest freedom for recommendation and recommend profile data with high scores, as calculated in the recommended data determination step, for each of the attribute values for the selected attribute. Further, the viewpoint-by-viewpoint recommendation step may figure out Kullback-Leibler's amount of information of an attribute value distribution for the attributes specified as outputs in the set of cases in the case database pertaining to the attribute value distribution for the attributes in the set of similar cases retrieved in the case retrieval step for each of the attributes specified as outputs, select an attribute with the smallest Kullback-Leibler's amount of information as the attribute with the greatest freedom for recommendation and recommend profile data with high scores, as figured out in the recommended data determination step, for each of the attribute values for the selected attribute.

The case retrieval step in the profile information recommendation method of the present invention retrieves cases similar to profile data given as input, creates a list of attribute values for the attribute occurring in the similar cases and specified as base attribute and retrieves the case database again for similar cases in which the base attribute values included in the list occur. Consequently, profile data, which would be unrecommendable based on the information obtained from similar profile data, can be recommended.

The profile information recommendation method of the present invention further comprises an input conversion step which converts input information by applying rules in an input conversion rule base which stores rules for conversion of input information. The profile information recommendation step of the present invention further comprises an output conversion step which converts output results by applying rules in an output conversion rule base which stores rules for conversion of output information.

According to a second aspect of the present invention there is provided a program for recommending profile information. The program allows a computer to execute:

an input step which specifies and enters at least profile data as input and a profile attribute to be output;
a case retrieval step which retrieves cases similar to profile data given as input, from the case database;
a dynamic learning step which figures out significance of each of attribute values for the attribute specified as output such that high significance is given to the attribute value which is characteristic of a set of cases retrieved in the case retrieval step; and
a recommended data determination step which based on the significance, as figured out in the dynamic learning step, of each of the attribute values for the attribute specified as output, figures out the score of each piece of profile data in the profile database and recommends profile data with high scores. The details of this program are substantially the same as the profile information recommendation method.

According to a third aspect of the present invention there is provided a profile information recommendation apparatus comprising:

a profile database which stores therein contents, services, users and the like as profile data featured as sets of pairs of an attribute and an attribute value;

a case database which stores therein relations taking place between a plurality of pieces of profile data as case data represented in the form of sets of profile data;

a case retrieval unit which retrieves cases similar to profile data given as input, from the case database;

a dynamic learning unit which figures out significance of each of attribute values for the attribute specified as output such that high significance is given to the attribute value which is characteristic of a set of cases retrieved by the case retrieval unit; and

a recommended data determination unit which based on the significance, as figured out by the dynamic learning unit, of each of the attribute values for the attribute specified as output, figures out the score of each piece of profile data in the profile database and recommends profile data with high scores.

The details of this recommendation apparatus are also substantially the same as the profile information recommendation method.

A preferred embodiment of the present invention will now be described, by way of example only, with reference to the accompanying drawings, in which:

Fig. 1 is an explanatory diagram of the operating environment to which the present invention applies;

Fig. 2 is a block diagram of the functional configuration of the profile recommendation apparatus according to the present invention;

Fig. 3 is an explanatory diagram of profile data, stored in the profile database, which characterizes users;

Fig. 4 is an explanatory diagram of profile data, stored in the profile database, which characterizes tennis circles;

Fig. 5 is an explanatory diagram of case data stored in the case database;

Fig. 6 is an explanatory diagram of compressed case data stored in the case database;

Fig. 7 is an explanatory diagram of case data to which an attribute and attribute value representing the relation between profile data are assigned;

Fig. 8 is an explanatory diagram of case data to which a user satisfaction level is assigned;

Figs. 9A and 9B are flowcharts of the recommendation processing performed by the present invention using the functional configuration shown in Fig. 2;

Fig. 10 is an explanatory diagram of inputs specification for initiating the recommendation processing of the present invention;

Figs. 11A to 11D are explanatory diagrams of conversion of inputs, shown in Fig. 10, in accordance with input conversion rules;

Fig. 12 is a flowchart of details of case retrieval in Step S6 shown in Fig. 9A based on specified base attribute;

Figs. 13A and 13B are explanatory diagrams of a set of cases specified as outputs and a set of retrieved similar cases which are used in significance calculations;

Fig. 14 is an explanatory diagram of a base attribute specified as input profile data and an attribute specified as output which are used in Figs. 13A and 13B;

Figs. 15A and 15B are explanatory diagrams of a discretization method for successive attribute values used for occurrence probability calculations;

Figs. 16A to 16D are explanatory diagrams of output conversion in accordance with output conversion rules shown in Fig. 9B;

Fig. 17 is an explanatory diagram of an output screen in which tennis circle recommendation results are output according to the present invention;

Fig. 18 is an explanatory diagram of an output screen in which kindergarten recommendation results are output according to the present invention; and

Fig. 19 is an explanatory diagram of an output screen in which related recommendation results are displayed by operating a button in the output screen shown in Fig. 18.

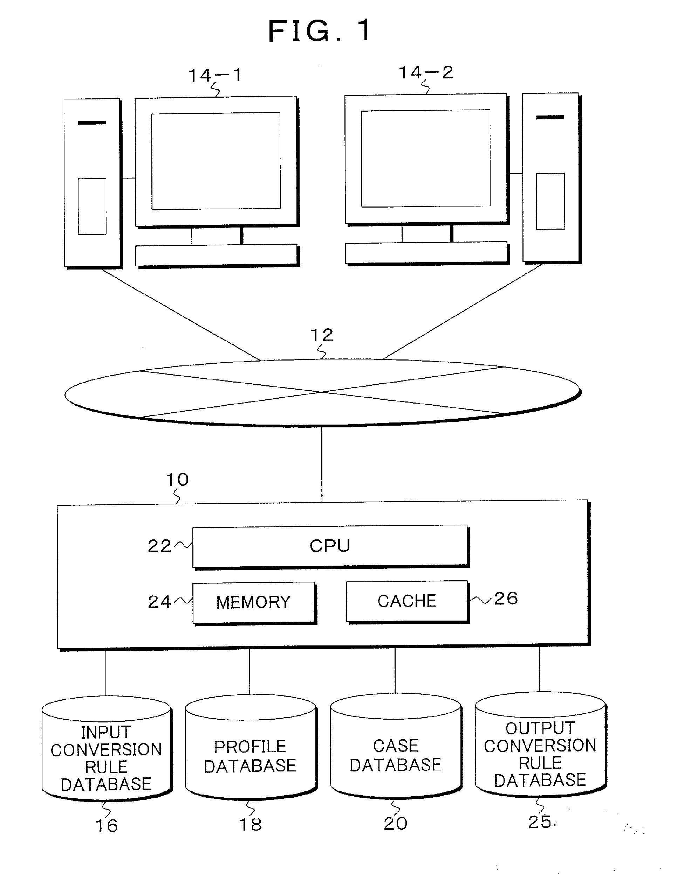

Fig. 1 is an explanatory diagram of the operating environment to which the processing for recommending profile information according to the present invention applies. Processing for recommending profile information according to this invention is performed in a profile information processing server 10. User units 14-1 and 14-2 are connected to the profile information processing server 10 via the Internet. The user units 14-1 and 14-2 comprise WWW browsers and make requests for recommendation processing using profile information on users, contents, services and the like by accessing the profile information processing server 10 via the Internet 12. An input conversion rule base 16, a profile database 18 and a case database 20 are connected to the profile information processing server 10. Note that these databases may be data files such as XML files. The profile information processing server 10 comprises a CPU 22, a memory 24 and a cache 26 in its hardware configuration. The program, which performs processing for recommendation of profile information according to this invention, is loaded into the memory 24 and run by the CPU 22, as a result of which recommendations of profile information are made.

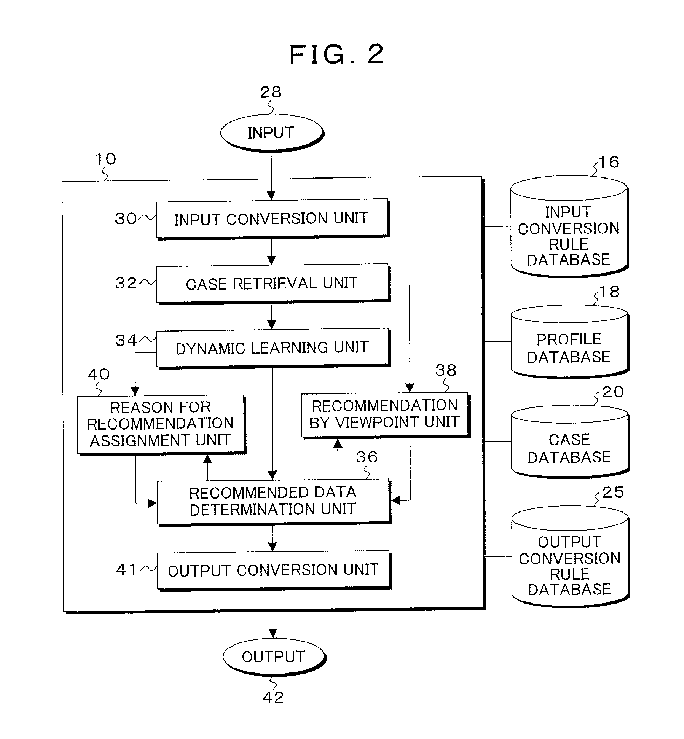

Fig. 2 is a block diagram of the functional configuration of the recommendation apparatus according to the present invention which recommends profile information. The input conversion rule base 16, the profile database 18, the case database 20 and an output conversion rule base 21 are connected to the profile information processing server 10. Note that the profile information processing server 10 has an input conversion unit 30, a case retrieval unit 32, a dynamic learning unit 34, a recommended data determination unit 36, a recommendation by viewpoint unit 38, a reason for recommendation assignment unit 40 and an output conversion unit 41. When a recommendation request input 28 is sent to the profile information processing server 10, a recommendation result 42 is obtained by the recommendation processing that corresponds to the request input. The profile database 18 stores arbitrary data, represented by a set of attribute-attribute-value pairs, as profile data. It is preferable that such profile data be characterization of users, contents, and even services.

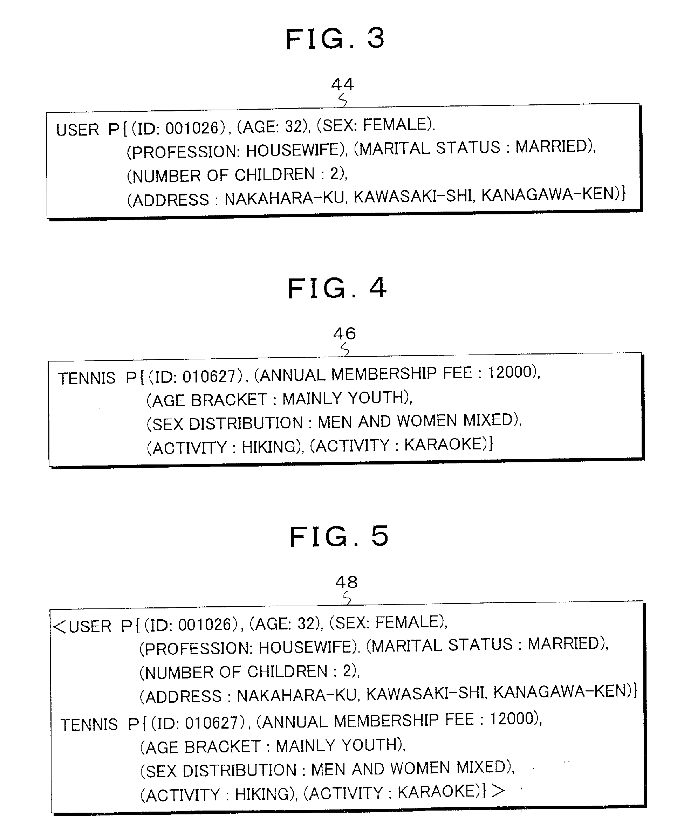

Fig. 3 is a specific example of profile data 44 used in the present invention. This profile data represents that which characterizes a specific user, and each element of the cluster such as (age, 32) and (sex, female) represents a pair of attribute and attribute value. Note that Fig. 4 represents profile data 46 which characterizes a tennis circle.

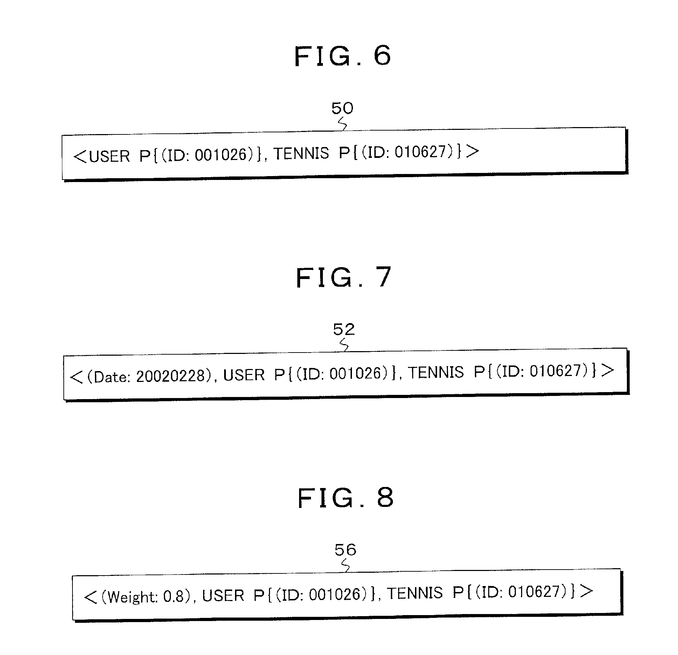

Next, case data used for the recommendation processing according to the present invention is described. The case database 20 shown in Fig. 2 stores case data in which a relation taking place between profile data is represented as a set of profile data. A specific example of case data is shown in Fig. 5. Case data 48 is a case which, for example, represents the relation that a user having (ID, 001206) in Fig. 3 joins a tennis circle having (ID, 010627) shown in the profile data 46 in Fig. 4. It is possible to compress the amount of data used for representation by expressing this case data 48 as a set of two profile data IDs, as with case data 50 shown in Fig. 6. As for this compressed case data 50, if one wishes to obtain information other than IDs, that is, attribute-attribute-value pairs, one needs only to retrieve the profile database 18 using IDs. Further, it is possible to assign attribute-attribute-value pair information concerning the relation between profile data to case data used in this invention. Suppose, for example, that a user characterized by the profile data 44 in Fig. 3 joins a tennis circle characterized by the profile data 46 in Fig. 4 on Feb. 28, 2002. This case data can be expressed in the form in which (Date, 20020228) pertaining to the relation between a group of profile data, is assigned as with case data 52 in Fig. 7. Moreover, if, for example, this user has 80% satisfaction level in relation to the tennis circle which he or she has joined, the case data can be expressed in the form in which (Weight, 0.8) is assigned as the attribute-attribute-value pair information pertaining to the satisfaction level between profile information data.

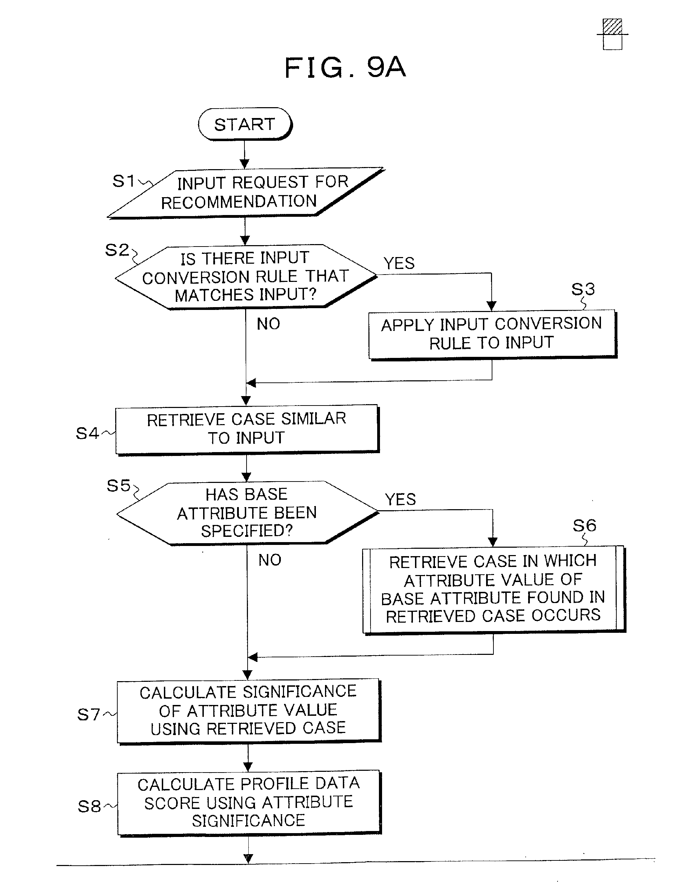

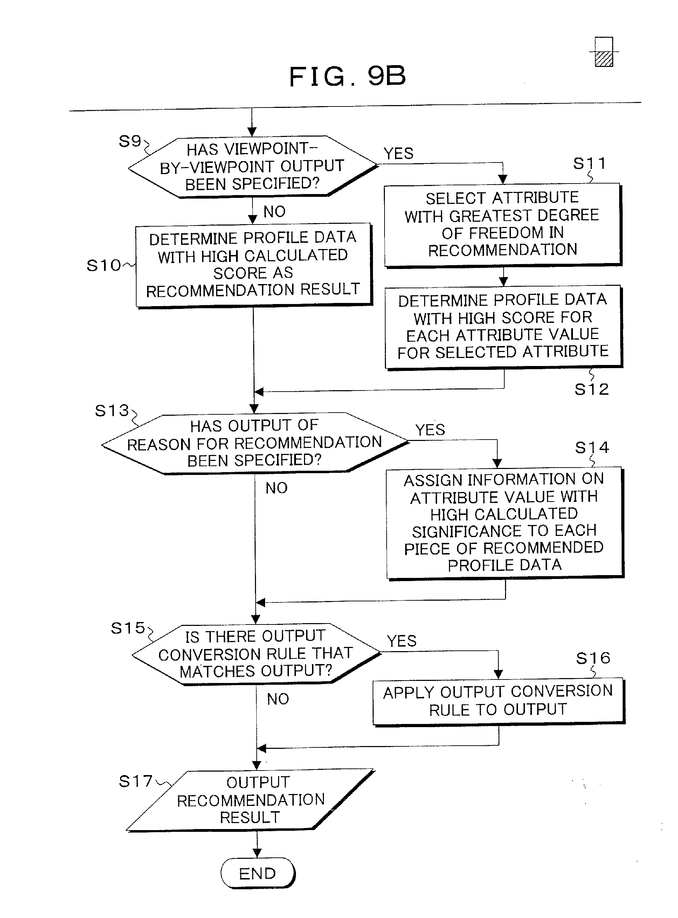

Next, the recommendation processing by the function of each of the units provided in the profile information processing server 10 in Fig. 2 is described by referring to the flowchart shown in Figs. 9A and 9B. In Fig. 9A, a request for recommendation is input by a user in Step S1 first. This input of recommendation request gives the following three pieces of information:

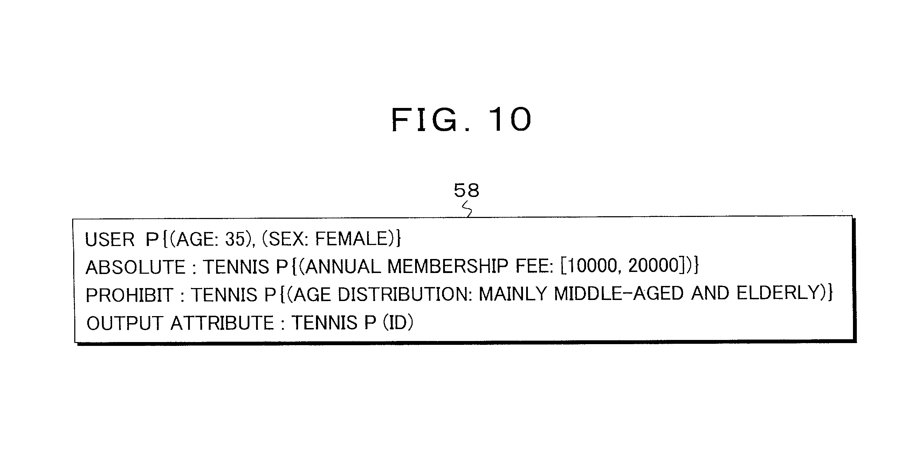

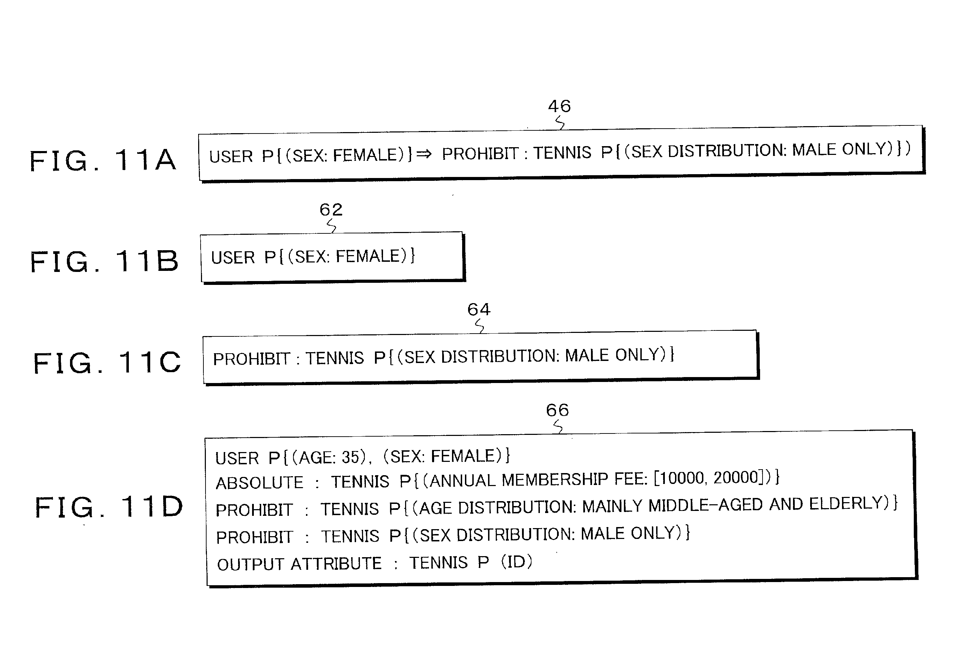

(1) Information on profile data which will serve as input
(2) Information on profile attribute which will be output
(3) Criterion setting regarding attribute value Note that it is possible to perform the recommendation processing even if the third piece of information or criterion setting regarding attribute value is not given. There are two options for this criterion setting regarding attribute value, namely, "Absolute" and "Prohibit." "Absolute" specifies an attribute value which must always be satisfied while "Prohibit" specifies an attribute value which is prohibited. For example, suppose that there is a recommendation request input 58 as shown in Fig. 10. This recommendation request input 58 means that tennis circles with annual membership fee between ¥10,000 and ¥20,000 and with age distribution of not mainly middle-aged and elderly will be recommended to a female user aged 35. When a recommendation request input is accepted in Step S1, whether there is an input conversion rule in the input conversion rule base 16 which matches the recommendation request input is checked in the following Step S2. If there is one, the input is converted by applying the input conversion rule to the recommendation request input in Step S3. Suppose, for example, that there is an input conversion rule 60 as shown in Fig. 11A in the input conversion rule base 16. This input conversion rule 60 means that tennis circles with sex distribution of men only will not be recommended to female users. A criterion unit 62 for the input conversion rule 60 is "user p{ (sex, female) }" as shown in Fig. 11B. If profile data matching the criterion unit 62 for the input conversion rule 60 is input, a conclusion unit 64 shown in Fig. 11C for the input conversion rule 60 is added, as shown in Fig. 11D, to the criterion setting of a recommendation request input 66 as "Prohibit: tennis p{(sex distribution, men only)}." In this case, if profile data matches the criterion section of the input conversion rule, it is possible to perform processing such as deletion and substitution in addition to addition of the conclusion section of the input conversion rule to the recommendation request input. It is possible to ensure that profile data, unsuitable for a user who has input a recommendation request, will not be recommended to the user and that profile data, suitable for a user who has input a recommendation request, will be recommended to the user, by creating such input conversion rules and storing them in the input conversion rule base 16.

Referring again to Fig. 9A, the degree of similarity between profile data, given as the recommendation request input, and case data in the case database 20 is calculated to determine similar case data in Step S4. In this determination of similar case data, the user-specified number of pieces of data among highly similar case data may be used, or similar case data may be separated by the user-specified similarity threshold. A publicly known method can be used to calculate the degree of similarity between profile data, given as input, and case data. For example, the degree of similarity between input profile data x and case data y can be calculated by the following function:

$$Sim(x, y) = \sum_{i=1}^{m} w_i \delta(x_i, y_i) \qquad (1)$$

Here, m represents the number of attributes specified in profile data x while xi and yi represent respectively the value of attribute i in profile data x and the value of attribute i in case data y. Note also that wi is the weight of attribute i and can be specified by a user or automatically determined by the apparatus using case information in the case database 20. $\delta$ is a distance measure and can be defined by attributes xi's and yi's hamming distances and the like if attribute i takes on a discrete value, and can be defined by normalized Euclidean distance and the like if attribute i takes on a continuous value.

Note that if attribute-attribute-value pair information (Weight, 0.8) pertaining to the relation between profile data is assigned to case data as shown in Fig. 8, this information can be added to the degree of similarity. For example, it is possible to use as the final degree of similarity the sum of the product of the satisfaction level-representing attribute value and the Weight value (0, 8) and the degree of similarity, calculated by the function in formula (1). Thus, in Step S4 , since case data similar to input profile data is determined by retrieving case data similar to individual input profiles, it is possible to flexibly respond to changes in the environment associated with addition, deletion and updating of profile data and case data and find only case data similar to input profile data. In the following Step S5, whether a base attribute has been specified at the time of recommendation request input in Step S1 is checked. If such an attribute has been specified, the processing in Step S6 is performed.

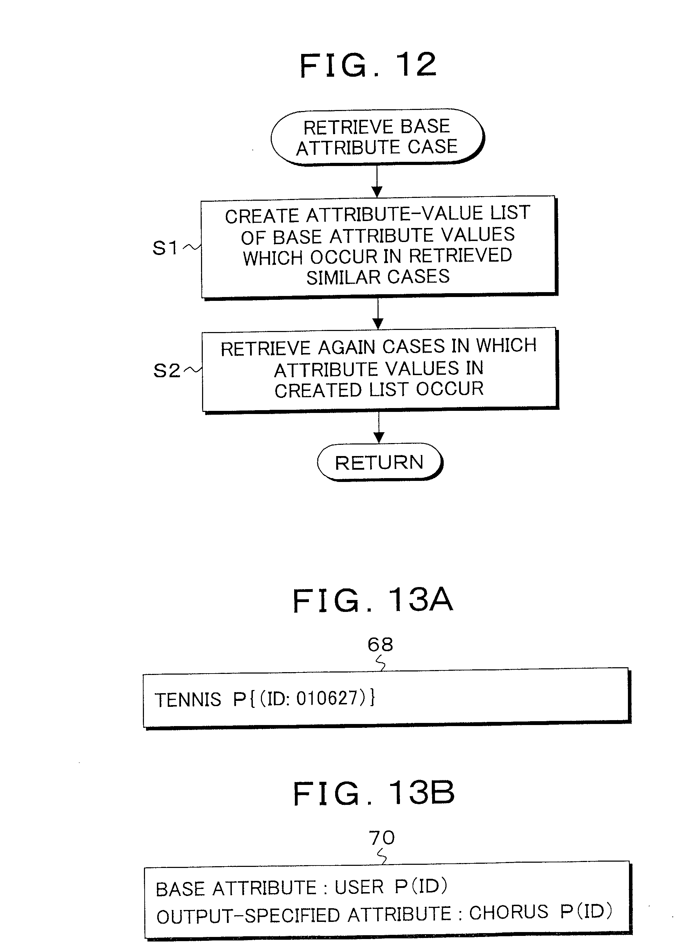

Fig. 12 is a flowchart showing details of how retrieval for base attribute case is made in Step S6 of Fig. 9A. First in Step S1, a list of values of base attributes, occurring in each piece of similar case data retrieved in Step 4 of Fig. 9A, is created. Next in Step S2 , the case database 20 is retrieved again for cases which contain attribute values in the created list. Here, a base attribute is specified if a recommendation is made based on the relation between profile data, given as input, and base attribute of profile data to be output. For example, this attribute is used when a user who is a member of a tennis circle recommends a chorus circle of which he or she is a member. In this case, the base attribute becomes the ID of user profile data. That is, suppose that profile data 68 is given as input as shown in Fig, 13A and further that a base attribute and attribute specified as output are given as shown in Fig. 13B. In this case, retrieval is first made for case data whose ID in profile data 68, given as input in Step S5 of Fig. 9A, is "010627." Next, in Step S1 of Fig. 12, a list of user profile IDs, given by base attributes occurring in profile data with ID=010627, is created. Then, in the next step S2, the case database 20 is retrieved again for case data containing user profile IDs included in the created list. Chorus circle profile data contained in the case data obtained as a result of second retrieval is used to recommend chorus circles through later processing.

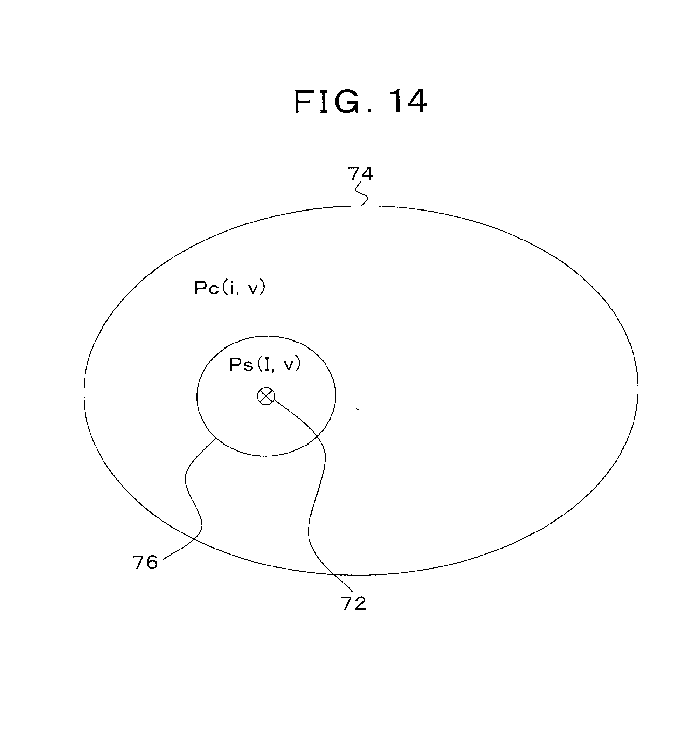

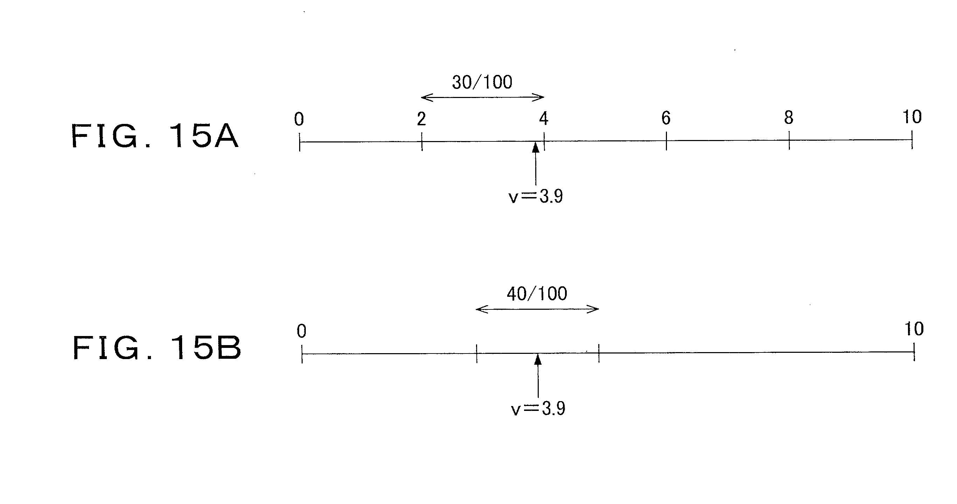

Next, in Step S7 of Fig. 9B, the significance of each attribute value for the attribute specified as output is calculated. This significance is calculated such that high significance is given to the attribute which is characteristic of the set of case data retrieved in Step S4 or S6, in order to provide appropriate recommendation for each piece of profile data given as input. The significance of each of the attribute values for the attribute specified as output is calculated, for example, as described below. First, the probability of occurrence of attribute value v for attribute i, which is specified as output in the set of similar cases retrieved in Step S4 or S6 of Fig. 9A, is expressed as Ps(i, v) , and the probability of occurrence of attribute value v for attribute i in the set of cases in the case database 20 is expressed as Pc(i, v) . Fig. 14 shows the relation between the set of similar cases 76 having the probability of occurrence Ps (i , v) and the set of cases having the probability of occurrence Pc(i, v) . That is, the set of similar cases 76, with the profile data 72 as input provided at the center of this set, exists within the set of cases with attribute value v for attribute i. Note that if attribute value i is a continuous value, this value is discretized to find probabilities of occurrence Ps(i, v) and Pc(i, v) . There are two ways to find the probabilities of occurrence by discretization of the attribute, as shown in Fig. 15A and 15B.

In Fig. 15A, the annual membership fee of a tennis circle is taken for example as attribute value v, and this value has a continuous value from ¥0 to ¥100,000. In the case of such a continuous attribute value, the first method for discretization of the value is to evenly discretize the attribute value from ¥0 to ¥100,000, for example, at intervals of ¥20,000 in order to find the probability of occurrence. For example, suppose that attribute value v = ¥39,000, then the probability of occurrence in the ¥20,000-¥40,000 range, for example, (30/100) is found in this case. Another method is to set a ¥10,000 margin above and below attribute value v = ¥39,000 and find the probability of occurrence, for example, (40/100) in the range between ¥29,000 and ¥49,000, as shown in Fig. 15B. For discretization of a continuous value, either of the methods shown in Figs. 15A and 15B can be employed. However, it can be said that the method in Fig. 15B offers a smaller discretization error.

With the first calculation method for significance of each of the attribute values for the attribute specified as output according to this invention, a frequently occurring attribute value within the set of retrieved cases is assumed to be an attribute value characteristic of the set of retrieved cases and significance IV(i, v) of attribute value v for attribute i is found by the following formula:

$$IV(i,v) = P_s(i,v) \qquad (2)$$

Note that with the second significance calculation method according to this invention, the significance is calculated as the residual between probability of occurrence Ps (i, v) in the set of retrieved cases and probability of occurrence Pc(i, v) in the set of cases in the case database 20 by the following formula:

$$IV(i,v) = P_s,(i,v) - P_c(i,v) \qquad (3)$$

Further, with the third significance calculation method according to this invention, the significance of attribute value is calculated by the following formula as the value corresponding to the attribute value of negative entropy for attribute value i in the set of cases in the case database 20 pertaining to the occurrence distribution of attribute value i in the set of retrieved cases:

$$IV(i, v) = P_c(i,v) Log \frac{P_s(i,v)}{P_c(i,v)} \qquad (4)$$

Here, negative entropy is expressed by the following polynomial:

$$IV(i,v) = P_c(i1, v1) Log \frac{P_s(i1,v1)}{P_c(i1,v1)} + P_c(i2,v2) Log \frac{P_s(i2,v2)}{P_c(i2,v2)} + ... \qquad (5)$$

In the polynomial on the right-hand side of this negative entropy, the term corresponding to the attribute specified as output and its value is extracted to give the value corresponding to the attribute value for negative entropy in formula (4). Note that it is desired that "Amount of Information Statistics by Takayuki Sakamoto, Makio Ishiguro and Genshiro Kitagawa (Kyoritsu Shuppan)" be referred to for negative entropy. In the following step S8, the score of each piece of profile data within the profile database 18 is calculated using the significance, as calculated in Step S7, of each of the attribute values for the attribute specified as output. Here, each of the scores is calculated by finding the sum of all significance values corresponding to attribute values occurring in each piece of profile data. Since score calculation is targeted for profile data within the profile database 18, there is a possibility that profile data not occurring in case data within the case database 20 may be recommended. Naturally, in order to ensure efficiency in processing, it is possible to calculate scores only for profile data occurring in case data retrieved in Step S4 or S6. Further, score calculation is not performed in Step S8 for those attributes whose significance values, calculated in Step S7, are negative. Note also that profile data is set to 0 if the criterion setting given as input is not satisfied. Further, the score of profile data, occurring in case data which contains profile data ID given as input, is set to 0, in order to prevent profile data given as input from being output as recommendation result. In the following Step S9, whether viewpoint-by-viewpoint output, in which recommended profile data is to be output for each of the attribute values for individual attributes specified as outputs, has been specified, is checked. If viewpoint-by-viewpoint output has not been specified, processing moves onto Step S10. When viewpoint-by-viewpoint output has been specified, processing moves onto Step S11. In Step S10, profile data with high scores calculated in Step S8 are determined as recommended profile data. Here, the user-specified number of pieces of profile data among profile data with high scores may be recommended or profile data may be separated by the user-specified score threshold. In the processing in Step S11 as required when viewpoint-by-viewpoint output has been specified in Step 9, viewpoint attributes, used to output recommended profile data by viewpoint, are selected from among those attributes specified as outputs. As for selection of viewpoint attribute, it is conceivably most beneficial to users to select as viewpoint attribute an attribute having attribute values whose significance is difficult to determine for input profile data, for example, select as viewpoint attribute an attribute with similar scores as calculated in Step S8. Here, the attribute with which non-freedom NF(i) for attribute i is the smallest, in other words, the attribute with the greatest freedom is selected as viewpoint attribute. Note that if candidates for viewpoint attribute are specified, the attribute with smallest non-freedom NF(i) of all candidates is selected as viewpoint attribute. To calculate this non-freedom NF(i), the probability of occurrence of attribute value v for attribute i, which is specified as output in the set of similar cases retrieved in Step S4 or S6, is expressed as Ps(i, v), and the probability of occurrence of attribute value v for attribute i in the set of cases in the case database 20 is expressed as Pc(i, v) . Note that if the attribute value takes on a continuous value, it is discretized to calculate the probability of occurrence. Note also that the mean probability of occurrence of attribute value v for attribute i is expressed as E(i). In this case, non-freedom NF(i) for attribute i is calculated by the following formula as variance of attribute values for attribute i:

$$NF(i) = \frac{1}{n} \sum_v \left( Ps(i, v) - E(i) \right)^2 \qquad (6)$$

Here, n represents the number of attribute values for attribute i.

Note that non-freedom NF(i) for attribute i can also be calculated by the following formula as sum square of the residual between probabilities of occurrence Ps(i, v) and Pc(i, v) .

$$NF(i) = \sum_v \left( Ps(i, v) - Pc(i) \right)^2 \qquad (7)$$

Further, non-freedom NF (i) can also be calculated as Kullback-Leibler's amount of information for the attribute value distribution for attribute i in the set of cases in the case database 20 pertaining to the attribute value distribution for attribute i in the retrieved cases:

$$NF(i) = \sum_v Pc(i, v) Log \frac{Pc(i, v)}{Ps(i, v)} \qquad (8)$$

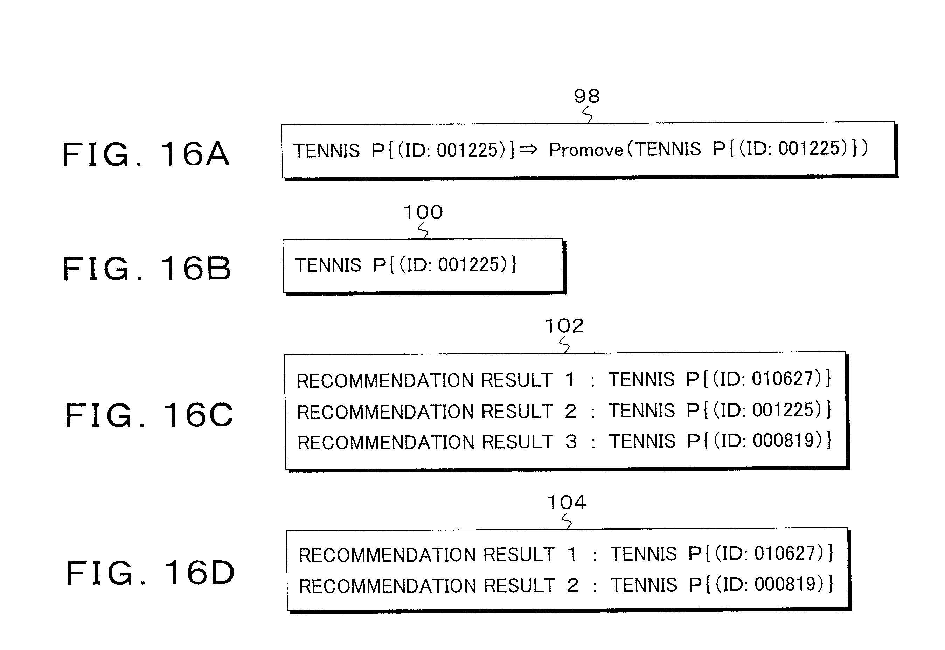

In the following Step S12, profile data with high scores, as calculated in Step 8, are determined as recommended profile data for each of the attribute values for the viewpoint attribute selected in Step S11. Here, the user-specified number of pieces of profile data among profile data with high scores may be recommended or profile data may be separated by the user-specified score threshold. In the following Step S13, whether output of reason for recommendation has been specified is checked, and when such an output has been specified, processing moves onto Step S14. If such an output has not been specified, recommended profile data is output in Step S15 . In Step 15, whether there is any rule matching the recommendation output result within the output conversion rule base 25 shown in Fig. 2 is checked, and when there is one, the output conversion rule is applied to recommendation output results for output conversion in Step S16. Suppose, for example, that there is an output conversion rule 98 as shown in Fig. 16A in the output conversion rule base 25. This output conversion rule 98 means that tennis circles with 001225 as ID will be deleted from recommendation results. A criterion section 100 of the output conversion rule 98 is "tennis p{(id, 001225) }" as shown in Fig. 16B. And, if recommendation results 102 matching the criterion section 100 of the output conversion rule 98 are given as shown in Fig. 16C, tennis circles other than that with 001225 as ID are output as shown in recommendation results 104 of Fig. 16D. Here, processing such as addition or substitution as well as deletion can be written in the conclusion section of an output conversion rule. By creating such output conversion rules and storing them in the output conversion rule base 25, it will be possible to control recommendation outputs, including deleting already-non-existing recommendation results, substituting a newly issued ID for an old one and adding information such as URL to recommendation results. In Step S17, attribute values with high significance given in Step 7, in which the significance of each of the attribute values for output attribute was calculated, are selected as reason for recommendation attributes, and pairs of corresponding attribute and attribute value are added to recommended profile data.

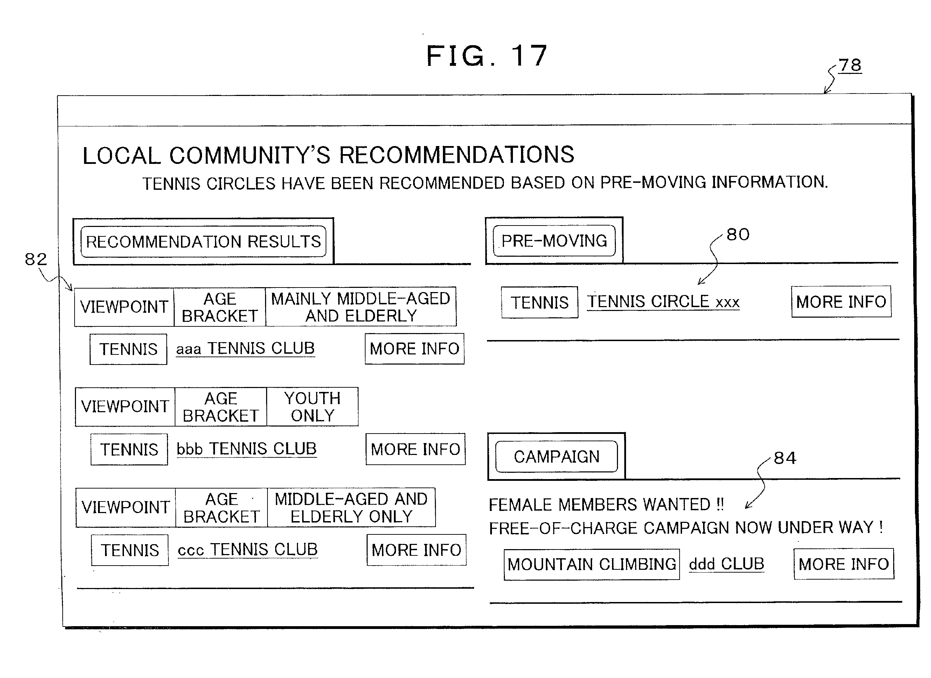

Fig. 17 is a specific example of the recommendation result output screen according to the present invention. In a recommendation result output screen 78, tennis circle recommendation results 82, obtained using pre-moving information 80, are displayed. Note that for the recommendation results 82, three viewpoint-by-viewpoint results are output in descending order of score. Note also that hyperlink information is added using input conversion rules to each of the tennis circles displayed in the pre-moving information 80 and the recommendation results 82. Further, input conversion rules are used to output campaign information 84.

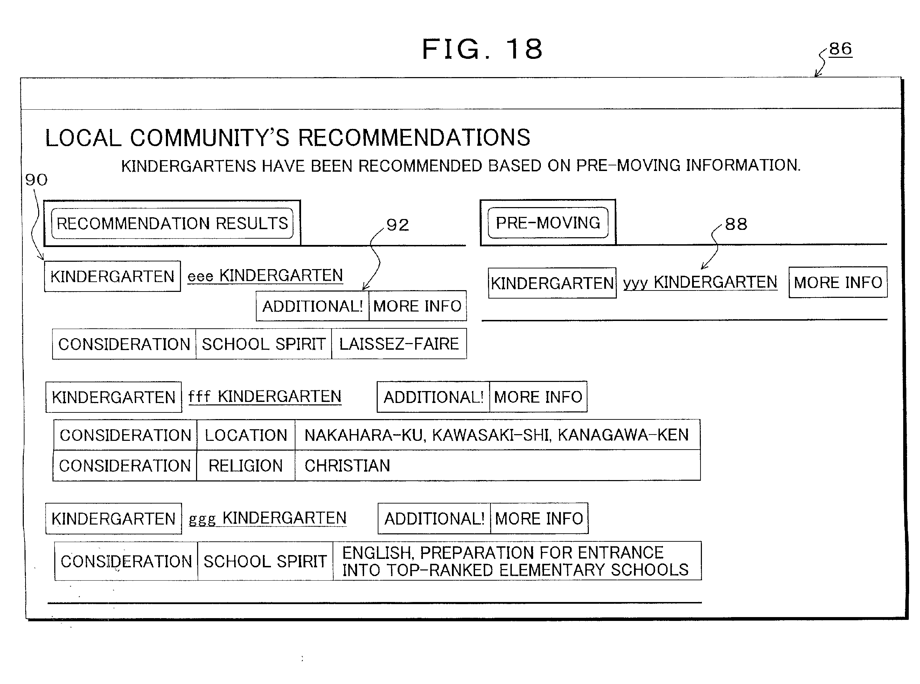

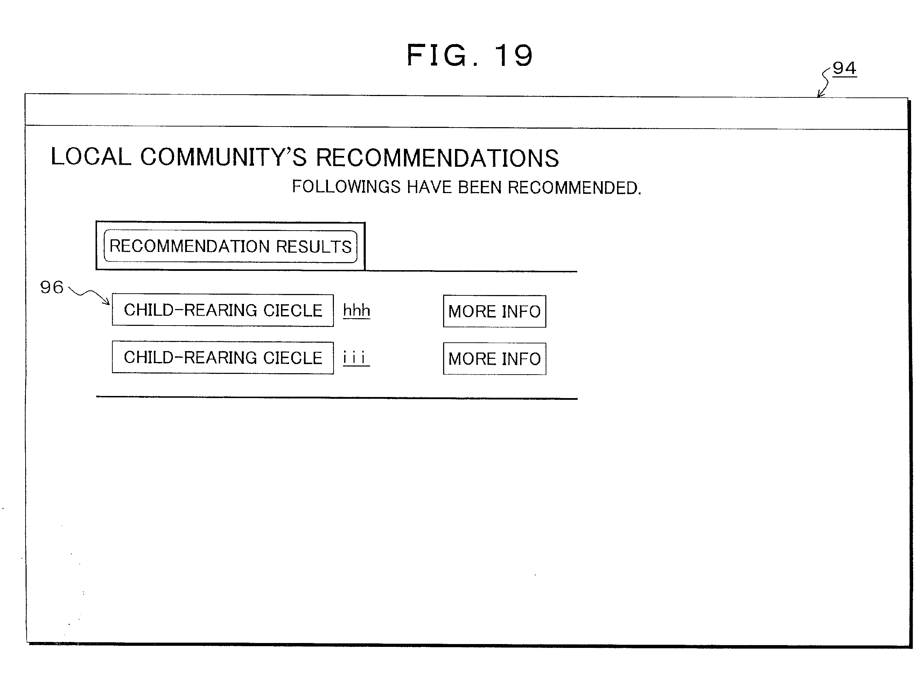

Fig. 18 is another specific example of the recommendation result output screen according to the present invention, in which kindergarten recommendation results are output. Recommendation results 90 are output in a recommendation result output screen 86, using pre-moving information 88, and the reason for recommendation is added to each of these recommendation results 90 as "consideration." Further, when a button 92 with the wording "this, too!", provided in the recommendation result output screen 86, is operated, it is possible to display a recommendation result output screen 94 for related recommendations based on "eee kindergarten" in Fig. 19. Through these related recommendations, it is possible for users to obtain related recommendation results 96 which they have not specified as outputs and to properly provide users with recommendation results useful for them.

As described above, since the present invention retrieves cases similar to input profile data and uses retrieved cases to make recommendations based on dynamic learning of significance of profile attributes, it can make optimal recommendations for users by responding, at a low running cost, to changes in profile data and case data. Note that since scores are calculated for profile data in the profile database using significance, it will be possible to recommend even new profile data if it is useful for a user. Further, presentation of reasons for recommendation and viewpoint-by-viewpoint recommendation results allows users to readily determine whether recommended profile data is useful for them.

Note that retrieved cases, attribute value significance and attribute freedom, obtained in the process of determining recommended data according to the present invention, can be output as necessary if their output is specified by users.

Although the present invention has been set forth in conjunction with the corresponding drawings, the present invention is not limited to those embodiments and could variously be modified and changed without departing from its scope. The present invention is not restricted by numerical values indicated in the above embodiments.

**Claims**

1. A profile information recommendation method using a profile database and a case database, the profile database storing therein contents, services, users and the like as profile data featured as sets of pairs of an attribute and an attribute value, the case database storing therein relations taking place between a plurality of pieces of profile data as case data represented in the form of profile data, said method comprising:

   an input step which specifies and enters at least profile data as input and a profile attribute to be output;
   a case retrieval step which retrieves cases similar to profile data given as input, from said case database;
   a dynamic learning step which figures out significance of each of attribute values for said attribute specified as output such that high significance is given to said attribute value which is characteristic of a set of cases retrieved in said case retrieval step; and
   a recommended data determination step which based on said significance, as figured out in said dynamic learning step, of each of said attribute values for said attribute specified as output, figures out the score of each piece of profile data in said profile database and recommends profile data with high scores.

2. A method as defined in claim 1, wherein
   said dynamic learning step figures out said significance of each of said attribute values for said attribute specified as output, in the form of probability of occurrence of said attribute value in said set of similar cases retrieved in said case retrieval step.

3. A method as defined in claim 1, wherein

said dynamic learning step figures out said significance of each of said attribute values for said attribute specified as output, in the form of a residual between probability of occurrence of said attribute value in said set of cases for said attribute specified as output in said case database and probability of occurrence of the attribute value in said set of similar cases retrieved in said case retrieval step.

4. A method as defined in claim 1, wherein

said dynamic learning step figures out said significance of each of said attribute values for said attribute specified as output, in the form of a value corresponding to each attribute value of negative entropy for an attribute value distribution for said attribute value specified as output in said set of cases in said case database pertaining to an occurrence distribution of attribute values for said attribute specified as output in said set of similar cases retrieved in said case retrieval step.

5. A method as defined in claim 1, further comprising:

a reason for recommendation assignment step which selects attribute values with high significance as figured out in said dynamic learning step, in the form of attribute values for reasons for recommendation of said profile data, from among attribute values occurring in each piece of profile data recommended in said recommended data determination step, said reason for recommendation assignment step assigning information on said selected attribute value to said profile data to make recommendations.

6. A method as defined in claim 1, further comprising:

a viewpoint-by-viewpoint recommendation step which selects an attribute with greatest freedom in said set of cases retrieved in said retrieval step for each of said attributes specified as outputs, said viewpoint-by-viewpoint recommendation step recommending profile data with high scores, as figured out in said recommended data determination step, for each of said attribute values for said attribute selected.

7. A method as defined in claim 6, wherein

said viewpoint-by-viewpoint recommendation step figures out a variance of probabilities of occurrence of attribute values for each of said attributes specified as outputs in said set of cases retrieved in said case retrieval step, selects an attribute with the smallest variance as said attribute with the greatest freedom for recommendation and recommends profile data with high scores, as figured out in said recommended data determination step, for each of said attribute values for said selected attribute.

8. A method as defined in claim 6, wherein

said viewpoint-by-viewpoint recommendation step figures out the sum square of a residual between probability of occurrence of each of said attribute values for each of said attributes specified as outputs in said set of cases in the case database and probability of occurrence of each of said attribute values for each of said attributes specified as outputs in said set of similar cases retrieved in said case retrieval step, selects an attribute with the smallest residual sum square as said attribute with the greatest freedom for recommendation and recommends profile data with high scores, as calculated in said recommended data determination step, for each of said attribute values for said selected attribute.

9. A method as defined in claim 6, wherein

said viewpoint-by-viewpoint recommendation step figures out Kullback-Leibler's amount of information of an attribute value distribution for said attributes specified as outputs in said set of cases in said case database pertaining to said attribute value distribution for said attributes in said set of similar cases retrieved in said case retrieval step for each of said attributes specified as outputs, selects an attribute with the smallest Kullback-Leibler's amount of information as said attribute with the greatest freedom for recommendation and recommends profile data with high scores, as figured out in said recommended data determination step, for each of said attribute values for said selected attribute.

10. A method as defined in claim 1, wherein

said case retrieval step retrieves cases similar to profile data given as input, creates a list of attribute values for said attribute occurring in said similar cases and specified as base attribute and retrieves said case database again for similar cases in which said base attribute values included in said list occur.

11. A method as defined in claim 1, further comprising:

an input conversion step which converts input information by applying rules in an input conversion rule base which stores rules for conversion of input information.

**12.** A method as defined in claim 1, further comprising:

an output conversion step which converts output results by applying rules in an output conversion rule base which stores rules for conversion of output information.

**13.** A program for recommending profile information, said program allowing a computer to execute:

an input step which specifies and enters at least profile data as input and a profile attribute to be output;
a case retrieval step which retrieves cases similar to profile data given as input, from said case database;
a dynamic learning step which figures out significance of each of attribute values for said attribute specified as output such that high significance is given to said attribute value which is characteristic of a set of cases retrieved in said case retrieval step; and
a recommended data determination step which based on said significance, as figured out in said dynamic learning step, of each of said attribute values for said attribute specified as output, figures out the score of each piece of profile data in said profile database and recommends profile data with high scores.

**14.** A program as defined in claim 13,
wherein
said dynamic learning step figures out said significance of each of said attribute values for said attribute specified as output, in the form of probability of occurrence of said attribute value in said set of similar cases retrieved in said case retrieval step.

**15.** A program as defined in claim 13,
wherein
said dynamic learning step figures out said significance of each of said attribute values for said attribute specified as output, in the form of a residual between probability of occurrence of said attribute value in said set of cases for said attribute specified as output in said case database and probability of occurrence of the attribute value in said set of similar cases retrieved in said case retrieval step.

**16.** A program as defined in claim 13,
wherein
said dynamic learning step figures out said significance of each of said attribute values for said attribute specified as output, in the form of a value corresponding to each attribute value of negative entropy for an attribute value distribution for said attribute value specified as output in said set of cases in said case database pertaining to an occurrence distribution of attribute values for said attribute specified as output in said set of similar cases retrieved in said case retrieval step.

**17.** A program as defined in claim 13,
wherein
said program allows said computer to further execute:

a reason for recommendation assignment step which selects attribute values with high significance as figured out in said dynamic learning step, in the form of attribute values for reasons for recommendation of said profile data, from among attribute values occurring in each piece of profile data recommended in said recommended data determination step, said reason for recommendation assignment step assigning information on said selected attribute value to said profile data to make recommendations.

**18.** A program as defined in claim 13, wherein
said program allows said computer to further execute:

a viewpoint-by-viewpoint recommendation step which selects an attribute with greatest freedom in said set of cases retrieved in said retrieval step for each of said attributes specified as outputs, said viewpoint-by-viewpoint recommendation step recommending profile data with high scores, as figured out in said recommended data determination step, for each of said attribute values for said attribute selected.

**19.** A program as defined in claim 18, wherein

said viewpoint-by-viewpoint recommendation step figures out a variance of probabilities of occurrence of attribute values for each of said attributes specified as outputs in said set of cases retrieved in said case retrieval step, selects an attribute with the smallest variance as said attribute with the greatest freedom for recommendation and recommends profile data with high scores, as figured out in said recommended data determination step, for each of said attribute values for said selected attribute.

**20.** A program as defined in claim 18, wherein

said viewpoint-by-viewpoint recommendation step figures out the sum square of a residual between probability of occurrence of each of said attribute values for each of said attributes specified as outputs in said set of cases in the case database and probability of occurrence of each of said attribute values for each of said attributes specified as outputs in said set of similar cases retrieved in said case retrieval step, selects an attribute with the smallest residual sum square as said attribute with the greatest freedom for recommendation and recommends profile data with high scores, as calculated in said recommended data determination step, for each of said attribute values for said selected attribute.

**21.** A program as defined in claim 18, wherein

said viewpoint-by-viewpoint recommendation step figures out Kullback-Leibler' s amount of information of an attribute value distribution for said attributes specified as outputs in said set of cases in said case database pertaining to said attribute value distribution for said attributes in said set of similar cases retrieved in said case retrieval step for each of said attributes specified as outputs, selects an attribute with the smallest Kullback-Leibler's amount of information as said attribute with the greatest freedom for recommendation and recommends profile data with high scores, as figured out in said recommended data determination step, for each of said attribute values for said selected attribute.

**22.** A program as defined in claim 13,
wherein

said case retrieval step retrieves cases similar to profile data given as input, creates a list of attribute values for said attribute occurring in said similar cases and specified as base attribute and retrieves said case database again for similar cases in which said base attribute values included in said list occur.

**23.** A program as defined in claim 13, wherein

said program allows said computer to further execute:

an input conversion step which converts input information by applying rules in an input conversion rule base which stores rules for conversion of input information.

**24.** A program as defined in claim 13, wherein

said program allows said computer to further execute:

an output conversion step which converts output results by applying rules in an output conversion rule base which stores rules for conversion of output information.

**25.** A profile information recommendation apparatus comprising:

a profile database which stores therein contents, services, users and the like as profile data featured as sets of pairs of an attribute and an attribute value;
a case database which stores therein relations taking place between a plurality of pieces of profile data as case data represented in the form of sets of profile data;
a case retrieval unit which retrieves cases similar to profile data given as input, from said case database;
a dynamic learning unit which figures out significance of each of attribute values for said attribute specified as output such that high significance is given to said attribute value which is characteristic of a set of cases retrieved by said case retrieval unit; and
a recommended data determination unit which based on said significance, as figured out by said dynamic learning unit, of each of said attribute values for said attribute specified as output, figures out the score of each piece of profile data in said profile database and recommends profile data with high scores.

**26.** An apparatus as defined in claim 25, wherein

said dynamic learning unit figures out said significance of each of said attribute values for said attribute specified as output, in the form of probability of occurrence of said attribute value in said set of similar cases retrieved by said case retrieval unit.

27. An apparatus as defined in claim 25, wherein
said dynamic learning unit figures out said significance of each of said attribute values for said attribute specified as output, in the form of a residual between probability of occurrence of said attribute value in said set of cases for said attribute specified as output in said case database and probability of occurrence of the attribute value in said set of similar cases retrieved by said case retrieval unit.

28. An apparatus as defined in claim 25, wherein
said dynamic learning unit figures out said significance of each of said attribute values for said attribute specified as output, in the form of a value corresponding to each attribute value of negative entropy for an attribute value distribution for said attribute value specified as output in said set of cases in said case database pertaining to an occurrence distribution of attribute values for said attribute specified as output in said set of similar cases retrieved by said case retrieval unit.

29. An apparatus as defined in claim 25, further comprising:

a reason for recommendation assignment unit which selects attribute values with high significance as figured out by said dynamic learning unit, in the form of attribute values for reasons for recommendation of said profile data, from among attribute values occurring in each piece of profile data recommended by said recommended data determination unit, said reason for recommendation assignment unit assigning information on said selected attribute value to said profile data to make recommendations.

30. An apparatus as defined in claim 25, further comprising:

a viewpoint-by-viewpoint recommendation unit which selects an attribute with greatest freedom in said set of cases retrieved by said retrieval unit for each of said attributes specified as outputs, said viewpoint-by-viewpoint recommendation unit recommending profile data with high scores, as figured out by said recommended data determination unit, for each of said attribute values for said attribute selected.

31. An apparatus as defined in claim 30, wherein
said viewpoint-by-viewpoint recommendation unit figures out a variance of probabilities of occurrence of attribute values for each of said attributes specified as outputs in said set of cases retrieved by said case retrieval unit, selects an attribute with the smallest variance as said attribute with the greatest freedom for recommendation and recommends profile data with high scores, as figured out by said recommended data determination unit, for each of said attribute values for said selected attribute.

32. An apparatus as defined in claim 30, wherein
said viewpoint-by-viewpoint recommendation unit figures out the sum square of a residual between probability of occurrence of each of said attribute values for each of said attributes specified as outputs in said set of cases in the case database and probability of occurrence of each of said attribute values for each of said attributes specified as outputs in said set of similar cases retrieved by said case retrieval unit, selects an attribute with the smallest residual sum square as said attribute with the greatest freedom for recommendation and recommends profile data with high scores, as calculated by said recommended data determination unit, for each of said attribute values for said selected attribute.

33. An apparatus as defined in claim 30, wherein
said viewpoint-by-viewpoint recommendation unit figures out Kullback-Leibler's amount of information of an attribute value distribution for said attributes specified as outputs in said set of cases in said case database pertaining to said attribute value distribution for said attributes in said set of similar cases retrieved by said case retrieval unit for each of said attributes specified as outputs, selects an attribute with the smallest Kullback-Leibler's amount of information as said attribute with the greatest freedom for recommendation and recommends profile data with high scores, as figured out by said recommended data determination unit, for each of said attribute values for said selected attribute.

34. An apparatus as defined in claim 25, wherein

said case retrieval unit retrieves cases similar to profile data given as input, creates a list of attribute values for said attribute occurring in said similar cases and specified as base attribute and retrieves said case database again for similar cases in which said base attribute values included in said list occur.

**35.** An apparatus as defined in claim 25, further comprising:

an input conversion rule base which stores therein rules for conversion of input information; and
an input conversion unit which converts input information by applying rules in said input conversion rule base.

**36.** An apparatus as defined in claim 25, further comprising:

an output conversion unit which converts output results by applying rules in an output conversion rule base which stores rules for conversion of output information.

# FIG. 1

14-1          14-2

12

10

| 22~ | CPU |
| 24~ | MEMORY | CACHE | ~26 |

INPUT
CONVERSION
RULE
DATABASE

PROFILE
DATABASE

CASE
DATABASE

OUTPUT
CONVERSION
RULE
DATABASE

16          18          20          25

# FIG. 2

# FIG. 3

44

USER P{(ID: 001026), (AGE: 32), (SEX: FEMALE),
(PROFESSION: HOUSEWIFE), (MARITAL STATUS : MARRIED),
(NUMBER OF CHILDREN : 2),
(ADDRESS : NAKAHARA-KU, KAWASAKI-SHI, KANAGAWA-KEN)}

# FIG. 4

46

TENNIS P{(ID: 010627), (ANNUAL MEMBERSHIP FEE : 12000),
(AGE BRACKET : MAINLY YOUTH),
(SEX DISTRIBUTION : MEN AND WOMEN MIXED),
(ACTIVITY : HIKING), (ACTIVITY : KARAOKE)}

# FIG. 5

48

<USER P{(ID: 001026), (AGE: 32), (SEX: FEMALE),
(PROFESSION: HOUSEWIFE), (MARITAL STATUS : MARRIED),
(NUMBER OF CHILDREN : 2),
(ADDRESS : NAKAHARA-KU, KAWASAKI-SHI, KANAGAWA-KEN)}
TENNIS P{(ID: 010627), (ANNUAL MEMBERSHIP FEE : 12000),
(AGE BRACKET : MAINLY YOUTH),
(SEX DISTRIBUTION : MEN AND WOMEN MIXED),
(ACTIVITY : HIKING), (ACTIVITY : KARAOKE)} >

# FIG. 6

50

# FIG. 7

52

<(Date: 20020228), USER P{(ID: 001026)}, TENNIS P{(ID: 010627)}>

# FIG. 8

56

<(Weight: 0.8), USER P{(ID: 001026)}, TENNIS P{(ID: 010627)}>

# FIG. 9A

START

S1 — INPUT REQUEST FOR RECOMMENDATION

S2 — IS THERE INPUT CONVERSION RULE THAT MATCHES INPUT?

YES → S3 APPLY INPUT CONVERSION RULE TO INPUT

NO

S4 — RETRIEVE CASE SIMILAR TO INPUT

S5 — HAS BASE ATTRIBUTE BEEN SPECIFIED?

YES → S6 RETRIEVE CASE IN WHICH ATTRIBUTE VALUE OF BASE ATTRIBUTE FOUND IN RETRIEVED CASE OCCURS

NO

S7 — CALCULATE SIGNIFICANCE OF ATTRIBUTE VALUE USING RETRIEVED CASE

S8 — CALCULATE PROFILE DATA SCORE USING ATTRIBUTE SIGNIFICANCE

# FIG. 9B

S9 — HAS VIEWPOINT-BY-VIEWPOINT OUTPUT BEEN SPECIFIED?

— YES → S11 — SELECT ATTRIBUTE WITH GREATEST DEGREE OF FREEDOM IN RECOMMENDATION

→ DETERMINE PROFILE DATA WITH HIGH SCORE FOR EACH ATTRIBUTE VALUE FOR SELECTED ATTRIBUTE — S12

— NO → S10 — DETERMINE PROFILE DATA WITH HIGH CALCULATED SCORE AS RECOMMENDATION RESULT

S13 — HAS OUTPUT OF REASON FOR RECOMMENDATION BEEN SPECIFIED?

— YES → S14 — ASSIGN INFORMATION ON ATTRIBUTE VALUE WITH HIGH CALCULATED SIGNIFICANCE TO EACH PIECE OF RECOMMENDED PROFILE DATA

— NO →

S15 — IS THERE OUTPUT CONVERSION RULE THAT MATCHES OUTPUT?

— YES → S16 — APPLY OUTPUT CONVERSION RULE TO OUTPUT

— NO →

S17 — OUTPUT RECOMMENDATION RESULT

END

# FIG. 10

58

USER P{(AGE: 35), (SEX: FEMALE)}

ABSOLUTE : TENNIS P{(ANNUAL MEMBERSHIP FEE: [10000, 20000])}

PROHIBIT : TENNIS P{(AGE DISTRIBUTION: MAINLY MIDDLE-AGED AND ELDERLY)}

OUTPUT ATTRIBUTE : TENNIS P (ID)

EP 1 345 131 A2

EP 1 345 131 A2

**FIG. 11A**

46

USER P{(SEX: FEMALE)} ⇒ PROHIBIT : TENNIS P{(SEX DISTRIBUTION: MALE ONLY)})

**FIG. 11B**

62

USER P{(SEX: FEMALE)}

**FIG. 11C**

64

PROHIBIT : TENNIS P{(SEX DISTRIBUTION: MALE ONLY)}

**FIG. 11D**

66

USER P{(AGE: 35), (SEX: FEMALE)}
ABSOLUTE : TENNIS P{(ANNUAL MEMBERSHIP FEE: [10000, 20000])}
PROHIBIT : TENNIS P{(AGE DISTRIBUTION: MAINLY MIDDLE-AGED AND ELDERLY)}
PROHIBIT : TENNIS P{(SEX DISTRIBUTION: MALE ONLY)}
OUTPUT ATTRIBUTE : TENNIS P (ID)

# FIG. 12

```
  ( RETRIEVE BASE
    ATTRIBUTE CASE )
          │
          ▼
┌─────────────────────────────┐
│  CREATE ATTRIBUTE-VALUE LIST │
│  OF BASE ATTRIBUTE VALUES    │
│  WHICH OCCUR IN RETRIEVED    │
│  SIMILAR CASES               │
└─────────────────────────────┘
          │
          ▼
┌─────────────────────────────┐
│  RETRIEVE AGAIN CASES IN WHICH│
│  ATTRIBUTE VALUES IN          │
│  CREATED LIST OCCUR           │
└─────────────────────────────┘
          │
          ▼
      ( RETURN )
```

S1 — CREATE ATTRIBUTE-VALUE LIST OF BASE ATTRIBUTE VALUES WHICH OCCUR IN RETRIEVED SIMILAR CASES

S2 — RETRIEVE AGAIN CASES IN WHICH ATTRIBUTE VALUES IN CREATED LIST OCCUR

# FIG. 13A

68

TENNIS P {(ID: 010627)}

# FIG. 13B

70

BASE ATTRIBUTE : USER P(ID)

OUTPUT-SPECIFIED ATTRIBUTE : CHORUS P(ID)

# FIG. 14

74

Pc(i, v)

Ps(I, v)

⊗

76

72

FIG. 15A

30/100

0    2         4      6        8       10

v=3.9

FIG. 15B

40/100

0                                          10

v=3.9

EP 1 345 131 A2

FIG. 16A

98

TENNIS P{(ID: 001225)} ⇒ Promove(TENNIS P{(ID: 001225)})

FIG. 16B

100

TENNIS P{(ID: 001225)}

FIG. 16C

102

RECOMMENDATION RESULT 1 : TENNIS P{(ID: 010627)}

RECOMMENDATION RESULT 2 : TENNIS P{(ID: 001225)}

RECOMMENDATION RESULT 3 : TENNIS P{(ID: 000819)}

FIG. 16D

104

RECOMMENDATION RESULT 1 : TENNIS P{(ID: 010627)}

RECOMMENDATION RESULT 2 : TENNIS P{(ID: 000819)}

EP 1 345 131 A2

# FIG. 17

## LOCAL COMMUNITY'S RECOMMENDATIONS

TENNIS CIRCLES HAVE BEEN RECOMMENDED BASED ON PRE-MOVING INFORMATION.

| RECOMMENDATION RESULTS |

| PRE-MOVING | 80 |

| VIEWPOINT | AGE BRACKET | MAINLY MIDDLE-AGED AND ELDERLY |

| TENNIS | aaa TENNIS CLUB | MORE INFO |

| TENNIS | TENNIS CIRCLE xxx | MORE INFO |

| VIEWPOINT | AGE BRACKET | YOUTH ONLY |

| TENNIS | bbb TENNIS CLUB | MORE INFO |

| CAMPAIGN | 84 |

| VIEWPOINT | AGE BRACKET | MIDDLE-AGED AND ELDERLY ONLY |

FEMALE MEMBERS WANTED !!
FREE-OF-CHARGE CAMPAIGN NOW UNDER WAY !

| TENNIS | ccc TENNIS CLUB | MORE INFO |

| MOUNTAIN CLIMBING | ddd CLUB | MORE INFO |

EP 1 345 131 A2

# FIG. 18

**LOCAL COMMUNITY'S RECOMMENDATIONS**

KINDERGARTENS HAVE BEEN RECOMMENDED BASED ON PRE-MOVING INFORMATION.

RECOMMENDATION RESULTS  92

PRE-MOVING  88

| KINDERGARTEN | eee KINDERGARTEN |
|---|---|

| ADDITIONAL! | MORE INFO |
|---|---|

| CONSIDERATION | SCHOOL SPIRIT | LAISSEZ-FAIRE |
|---|---|---|

| KINDERGARTEN | fff KINDERGARTEN | | ADDITIONAL! | MORE INFO |
|---|---|---|---|---|

| CONSIDERATION | LOCATION | NAKAHARA-KU, KAWASAKI-SHI, KANAGAWA-KEN |
|---|---|---|
| CONSIDERATION | RELIGION | CHRISTIAN |

| KINDERGARTEN | ggg KINDERGARTEN | | ADDITIONAL! | MORE INFO |
|---|---|---|---|---|

| CONSIDERATION | SCHOOL SPIRIT | ENGLISH, PREPARATION FOR ENTRANCE INTO TOP-RANKED ELEMENTARY SCHOOLS |
|---|---|---|

| KINDERGARTEN | yyy KINDERGARTEN | MORE INFO |
|---|---|---|

90

86

EP 1 345 131 A2

# FIG. 19

EP 1 345 131 A2

94

## LOCAL COMMUNITY'S RECOMMENDATIONS

FOLLOWINGS HAVE BEEN RECOMMENDED.

RECOMMENDATION RESULTS

96

| CHILD-REARING CIECLE | hhh | MORE INFO |

| CHILD-REARING CIECLE | iii | MORE INFO |